# EUROPEAN PATENT APPLICATION

(11) **EP 3 757 186 A1**
(43) Date of publication of application: **30.12.2020**
(21) Application number: 19754855.5
(22) Date of filing: 22.01.2019
(51) Int. Cl.: C09J 183/07, B32B 27/00, C09J 4/06, C09J 7/38, C09J 11/04, C09J 11/06, C09J 183/04, C09J 183/05

(54) **SILICONE PRESSURE-SENSITIVE ADHESIVE COMPOSITION AND LAYERED PRODUCT**

(30) Priority: 19.02.2018 JP 2018026729
(71) Applicant: Dow Toray Co., Ltd., Tokyo 140-8617 (JP)
(72) Inventor: HINO, Takakazu, Ichihara-shi, Chiba 299-0108 (JP)
(74) Representative: Murgitroyd & Company
(86) International application number: PCT/JP2019/001926
(87) International publication number: WO 2019/159611

(57) **Abstract**

The present invention relates to a silicone pressure-sensitive adhesive composition comprising: (A) a chain organopolysiloxane having at least two alkenyl groups in each molecule; (B) an organopolysiloxane containing a siloxane unit represented by the formula: R¹₃SiO_{1/2} and a siloxane unit represented by the formula: SiO_{4/2}, wherein, R¹ is the same or different unsubstituted or halogen-substituted monovalent hydrocarbon group having 1 to 12 carbon atoms; (C) at least one reactive diluent having one aliphatic unsaturated carbon-carbon bond in each molecule; (D) an organopolysiloxane having at least eight hydrogen atom-bonding siloxane units in each molecule; and (E) a hydrosilylation reaction catalyst. The silicone pressure-sensitive adhesive composition according to the present invention forms a pressure-sensitive adhesive layer exhibiting good adhesiveness along with little change in adhesiveness over time.

## Description

### [TECHNICAL FIELD]

The present invention relates to a silicone pressure-sensitive adhesive composition, along with a laminate having a pressure-sensitive adhesive layer formed using this composition.

### [BACKGROUND ART]

Organic solvents are generally used to adjust viscosity of silicone pressure-sensitive adhesive compositions. However, in terms of environmental problems and health considerations of users in recent years, silicone pressure-sensitive adhesive compositions have been examined in which the amount of organic solvent used is decreased or the organic solvent is not used at all. For example, Patent Document 1 proposes a silicone pressure-sensitive adhesive composition containing a hydrocarbon compound having one aliphatic unsaturated carbon-carbon bond in each molecule as a reactive diluent.

Unfortunately, such a silicone pressure-sensitive adhesive composition problematically causes a change in adhesion over time.

### [Prior Art Documents]

### [Patent Documents]

Patent Document 1: Japanese Publication of International Patent (PCT) Application No. 2006-520838

### [SUMMARY OF THE INVENTION]

### [Problems to be Solved by the Invention]

An object of the present invention is to provide a silicone pressure-sensitive adhesive composition forming a pressure-sensitive adhesive layer which exhbits good adhesiveness along with little change in adhesiveness over time, in addition to providing a laminate having a pressure-sensitive adhesive layer which causes little change in adhesion over time.

### [Means for Solving the Problems]

The silicone pressure-sensitive adhesive composition of the present invention comprises:
(A) a chain organopolysiloxane having at least two alkenyl groups in each molecule;
(B) an organopolysiloxane containing a siloxane unit represented by the formula: R¹₃SiO_{1/2} and a siloxane unit represented by the formula: SiO_{4/2}, wherein, R¹ is the same or different unsubstituted or halogen-substituted monovalent hydrocarbon group having 1 to 12 carbon atoms, and wherein a molar ratio of the siloxane unit represented by the formula: R¹₃SiO_{1/2} to the siloxane unit represented by the formula: SiO_{4/2} is 0.5 to 1.5, in an amount of 10 mass% or more and 80 mass% or less of the present composition;
(C) at least one reactive diluent having one aliphatic unsaturated carbon-carbon bond in each molecule, in an amount of more than 0 mass% and 30 mass% or less of the present composition;
(D) an organopolysiloxane having at least eight hydrogen atom-bonding siloxane units in each molecule, in an amount to provide 0.1 mol or more and 1.5 mol or less of silicon atom-bonded hydrogen atoms with respect to 1 mol of a total of aliphatic unsaturated carbon-carbon bonds in components (A) to (C); and
(E) a hydrosilylation reaction catalyst, in an amount sufficient to promote a hydrosilylation reaction of the present composition.

Component (B) may have 0.1 to 2.0 mass% of silicon atom-bonded hydroxyl groups.

Component (C) is preferably at least one selected from a group consisting of a branched or linear alkene having 6 to 24 carbon atoms, a branched or linear alkyne having 6 to 24 carbon atoms, and an organosiloxane having one alkenyl group or alkynyl group in each molecule, wherein this alkene is preferably dodecene, tetradecene, or hexadecene, and wherein this organosiloxane is preferably an organosiloxane represented by the general formula:

R²R³ₐSi[(OSiR³₂)_{b}OSiR³₃]₍₃₋ₐ₎

wherein, R² is an alkenyl group or alkynyl group having 2 to 12 carbon atoms, R³ is the same or different unsubstituted or halogen-substituted monovalent hydrocarbon group having 1 to 12 carbon atoms and having no aliphatic unsaturated carbon-carbon bond, "a" is 0, 1, or 2, and "b" is an integer from 0 to 50.

A content of component (C) is preferably 1 to 25 mass% of the present composition.

Component (D) is preferably an organopolysiloxane having at least 0.5 mass% of silicon-atom bonded hydrogen atoms.

The present composition may further comprise: (F) a hydrosilylation reaction inhibitor, in an amount of 5 parts by mass or less with respect to 100 parts by mass of a total of components (A) to (E).

The laminate according to the present invention comprises: a support, and a pressure-sensitive adhesive layer formed thereon by subjecting the abovementioned silicone pressure-sensitive adhesive composition to a hydrosilylation reaction.

### [Effects of the Invention]

The silicone pressure-sensitive adhesive composition according to the present invention forms a pressure-sensitive adhesive layer which exhibits good adhesiveness along with little change in adhesiveness over time, while the laminate according to the present invention forms a pressure-sensitive adhesive layer exhibiting little change in adhesion.

### [Brief Description of the Drawings]

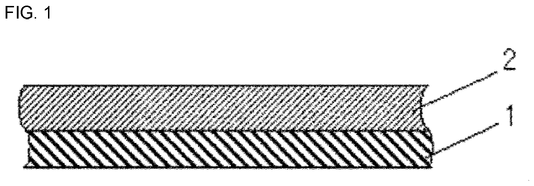

FIG. 1 is a cross sectional view of a laminate of the present invention.

### [Mode for Carrying Out the Invention]

First, the silicone pressure-sensitive adhesive composition of the present invention will be described in detail.

Component (A) is a chain organopolysiloxane having at least two alkenyl groups in each molecule. Exemplary alkenyl groups in component (A) include alkenyl groups having 2 to 12 carbon atoms, such as vinyl groups, allyl groups, butenyl groups, pentenyl groups, hexenyl groups, heptenyl groups, octenyl groups, pentenyl groups, undecenyl groups, and dodecenyl groups, among which vinyl groups and hexenyl groups are preferable. While the bonding position of this alkenyl group is not limited, for example, the alkenyl group may be bonded to silicon atoms at a terminal of a molecular chain and/or silicon atoms in a molecular chain, wherein the bonding position is preferably silicon atoms at a terminal of a molecular chain. Exemplary silicon atom-bonded organic groups other than alkenyl groups in component (A) include: alkyl groups having 1 to 12 carbon atoms, such as methyl groups, ethyl groups, propyl groups, isopropyl groups, butyl groups, isobutyl groups, pentyl groups, isopentyl groups, neopentyl groups, heptyl groups, octyl groups, nonyl groups, decyl groups, undecyl groups, and dodecyl groups; aryl groups having 6 to 12 carbon atoms, such as phenyl groups, tolyl groups, and xylyl groups; aralkyl groups having 6 to 12 carbon atoms, such as benzyl groups and phenethyl groups; and halogenated alkyl groups having 1 to 12 carbon atoms, such as chloromethyl groups, 3-chloropropyl groups, and 3,3,3-trifluoropropyl groups, with methyl groups and phenyl groups preferable. Moreover, the molecular structure of component (A) is a chain structure, with specific examples thereof including a linear structure, partially branched linear structure, or branched structure, with a linear structure preferable.

Examples of component (A) include a dimethylpolysiloxane end-blocked at both molecular chain terminals with dimethylvinylsiloxy groups, dimethylpolysiloxane end-blocked at both molecular chain terminals with hexenyldimethylsiloxy groups, dimethylpolysiloxane end-blocked at both molecular chain terminals with diphenylvinylsiloxy groups, dimethylsiloxane-methylphenylsiloxane copolymer end-blocked at both molecular chain terminlas with dimethylvinylsiloxy groups, dimethylsiloxane-diphenylsiloxane copolymer end-blocked at both molecular chain terminals with dimethylvinylsiloxy groups, dimethylsiloxane-methylphenylsiloxane copolymer end-blocked at both molecular chain terminals with diphenylvinylsiloxy groups, dimethylsiloxane-methylvinylsiloxane copolymer end-blocked at both molecular chain terminals with dimethylvinylsiloxy groups, dimethylsiloxane-methylphenylsiloxane-methylvinylsiloxane copolymer end-blocked at both molecular chain terminals with dimethylvinylsiloxy groups, dimethylsiloxane-diphenylsiloxane-methylvinylsiloxane copolymer end-blocked at both molecular chain terminals with dimethylvinylsiloxy groups, methylvinylpolysiloxane end-blocked at both molecular chain terminals with trimethylsiloxy groups, dimethylsiloxane-hexenylmethylsiloxane copolymer end-blocked at both molecular chain terminals with trimethylsiloxy groups, methylvinylsiloxane-methylphenylsiloxane copolymer end-blocked at both molecular chain terminals with trimethylsiloxy groups, methylvinylsiloxane-diphenylsiloxane copolymer end-blocked at both molecular chain terminals with trimethylsiloxy groups, dimethylsiloxane-methylvinylsiloxane copolymer end-blocked at both molecular chain terminals with trimethylsiloxy groups, dimethylsiloxane-methylvinylsiloxane copolymer end-blocked at both molecular chain terminals with dimethylhexenylsiloxy groups, dimethylsiloxane-methylhexenylsiloxane copolymer end-blocked at both molecular chain terminals with dimethylhexenylsiloxy groups, dimethylvinylsiloxy group-terminated poly(dimethylsiloxane-methylsilsesquioxane) copolymer, dimethylvinylsiloxy group-terminated poly(dimethylsiloxane-methylvinylsiloxane-methylsilsesquioxane) copolymer, trimethylsiloxy group-terminated poly(dimethylsiloxane-methylvinylsiloxane-methylsilsesquioxane) copolymer, hexenyldimethylsiloxy group-terminated poly(dimethylsiloxane-monomethylsilsesquioxane) copolymer, hexenyldimethylsiloxy group-terminated poly(dimethylsiloxane-hexenylmethylsiloxane-methylsilsesquioxane) copolymer, trimethylsiloxy group-terminated poly(dimethylsiloxane-hexenylmethylsiloxane-methylsilsesquioxane) copolymer, dimethylvinylsiloxy group-terminated poly(dimethylsiloxane-silicate) copolymer, hexenyldimethylsiloxy group-terminated poly(dimethylsiloxane-silicate) copolymer, trimethylsiloxy group-terminated poly(dimethylsiloxane-methylvinylsiloxane-silicate) copolymer, trimethylsiloxy group-terminated poly(dimethylsiloxane-hexenylmethylsiloxane-silicate) copolymer, trimethylsiloxy group-dimethylvinylsiloxy group-mixed terminated poly(dimethylsiloxane-silicate) copolymer, trimethylsiloxy group-hexenyldimethylsiloxy group-mixed terminated poly(dimethylsiloxane-silicate) copolymer, trimethylsiloxy group-dimethylvinylsiloxy group-mixed terminated poly(dimethylsiloxane-methylvinylsiloxane-silicate) copolymer, trimethylsiloxy group-hexenyldimethylsiloxy group-mixed terminated poly(dimethylsiloxane-hexenylmethylsiloxane-silicate) copolymer, and mixtures of two or more of these organopolysiloxanes.

While not limited thereto, a viscosity of such component (A) at 25°C is preferably 10 mPa·s or more and 10,000 mPa·s or less, or 100 mPa·s or more and 5,000 mPa·s or less, or 200 mPa·s or more and 3,000 mPa·s or less. This is because, if the viscosity of component (A) is at the lower limit of the abovementioned range or more, sufficient adhesion is obtained; in contrast, if the viscosity is at the upper limit of the abovementioned range or less, the handleability of the present composition is good. Note that the viscosity of component (A) at 25°C can be measured by a rotational viscometer in accordance with JIS K7117-1. Moreover, component (A) having a high viscosity and a low viscosity is preferably mixed as component (A); for example, even when one having a viscosity of more than 10,000 mPa·s at 25°C is used as a portion of component (A), one having a low viscosity is mixed as the rest of component (A), with the viscosity within the abovementioned range capable of improving the leveling properties upon coating of the present composition.

Component (B) is an organopolysiloxane which has a siloxane unit represented by the formula: R¹₃SiO_{1/2} along with a siloxane unit represented by the formula: SiO_{4/2}, wherein a molar ratio of the siloxane unit represented by the formula: R¹₃SiO_{1/2} to the siloxane unit represented by the formula: SiO_{4/2} is within a range of 0.5 to 1.5, wherein this molar ratio is preferably within a range of 0.5 to 1.2, within a range of 0.6 to 1.2, or within a range of 0.8 to 1.2. This is because, if this molar ratio is within the abovementioned range, the adhesion of the obtained pressure-sensitive adhesive layer increases.

In the formula, R¹ is the same or different unsubstituted or halogen-substituted monovalent hydrocarbon group having 1 to 12 carbon atoms, with specific examples thereof including alkyl groups having 1 to 12 carbon atoms, such as methyl groups, ethyl groups, propyl groups, isopropyl groups, butyl groups, isobutyl groups, pentyl groups, isopentyl groups, neopentyl groups, heptyl groups, octyl groups, nonyl groups, decyl groups, undecyl groups, and dodecyl groups; alkenyl groups having 2 to 12 carbon atoms, such as vinyl groups, allyl groups, butenyl groups, pentenyl groups, hexenyl groups, heptenyl groups, octenyl groups, pentenyl groups, undecenyl groups, and dodecenyl groups; aryl groups having 6 to 12 carbon atoms, such as phenyl groups, tolyl groups, and xylyl groups; aralkyl groups having 6 to 12 carbon atoms, such as benzyl groups and phenethyl groups; and halogenated alkyl groups having 1 to 12 carbon atoms, such as chloromethyl groups, 3-chloropropyl groups, and 3,3,3-trifluoropropyl groups, with methyl groups, vinyl groups and phenyl groups preferable.

Moreover, silicon atoms in component (B) may have hydroxyl groups or hydrolyzable groups in addition to the abovementioned monovalent hydrocarbon groups. Exemplary hydrolyzable groups include alkoxy groups having 1 to 3 carbon atoms, such as methoxy groups, ethoxy groups, and propoxy groups; acetoxy groups; and isopropenoxy groups. If component (B) has silicon atom-bonded hydroxyl groups, a content thereof is not limited, but is preferably within a range of 0.1 to 2.0 mass%.

Component (B) has a siloxane unit represented by the formula: R¹₃SiO_{1/2} and a siloxane unit represented by the formula: SiO_{4/2}, and may have a very small amount of a siloxane unit represented by the formula: R¹₂SiO_{2/2} and a siloxane unit represented by the formula: R¹SiO_{3/2} as long as the object of the present invention is not impaired. Note that in the formula, R¹ is the same as described above.

A content of component (B) is 10 mass% or more and 80 mass% or less of the present composition, wherein the lower limit thereof is preferably 15 mass% or more, 20 mass% or more, 25 mass% or more, 30 mass% or more, 35 mass% or more, 40 mass% or more, or 45 mass% or more, while the upper limit thereof is preferably 75 mass% or less, 70 mass% or less, 65 mass% or less, 65 mass% or less, or 60 mass% or less. This is because, if the content of component (B) is within the abovementioned range, the adhesiveness of the obtained pressure-sensitive adhesive layer is good.

Note that if component (B) is in a solid state at 25°C and it is difficult to uniformly mix component (B) in the present composition, such can be resolved by preparing an organic solution of component (B) in advance, and mixing with a portion or all of components (A), (C), and (D), after which the used organic solvent can be removed from this mixture. Note that the organic solvent which can be used to prepare the organic solution of component (B) can be used as long as it can dissolve component (B) and be easily removed. While not limited thereto, specific examples thereof include: aromatic hydrocarbons such as toluene and xylene; and aliphatic hydrocarbons such as hexane and heptane.

Component (C) is at least one reactive diluent having one aliphatic unsaturated carbon-carbon bond in each molecule in order to adjust the viscosity of the present composition without reducing the adhesiveness of the pressure-sensitive adhesive layer. Such component (C) is preferably at least one selected from a group consisting of a branched or linear alkene having 6 to 24 carbon atoms, a branched or linear alkyne having 6 to 24 carbon atoms, and an organosiloxane having one aliphatic unsaturated carbon-carbon bond in each molecule.

The alkene for component (C) is not particularly limited as long as it is a branched or linear alkene having 6 to 24 carbon atoms. However, because it has good reactivity, the aliphatic unsaturated carbon-carbon double bond thereof is preferably at a terminal of a molecular chain. Exemplary alkenes of such component (C) include unsubstituted alkenes such as hexene, heptene, octene, nonene, decene, undecene, dodecene, tridecene, tetradecene, hexadecene, heptadecene, octadecene, and 2-octyl-1-dodecene; or alkene obtained by substituting portions of hydrogen atoms of these alkenes with ether groups, ester groups, epoxy groups, amino groups, etc., with dodecene, tetradecene, or hexadecene preferable.

The alkyne for component (C) is not particularly limited as long as it is a branched or linear alkyne having 6 to 24 carbon atoms. However, because it has good reactivity, the aliphatic unsaturated carbon-carbon triple bond thereof is preferably at a terminal of a molecular chain. Exemplary alkynes of such component (C) include unsubstituted alkynes such as hexyne, heptyne, octyne, nonyne, decyne, undecyne, dodecyne, tridecyne, tetradecyne, hexadecyne, heptadecyne, octadecyne, and 2-octyl-1-dodecyne; alkyne obtained by substituting portions of hydrogen atoms of these alkynes with ether groups, ester groups, epoxy groups, amino groups, etc., with dodecyne, tetradecyne, or hexadecyne preferable.

Moreover, exemplary organosiloxanes for component (C) include an organosiloxane represented by the general formula:

R²R³ₐSi[(OSiR³₂)_{b}OSiR³₃]₍₃₋ₐ₎.

In the formula, R² is an alkenyl group or alkynyl group having 2 to 12 carbon atoms. Exemplary alkenyl groups of R² include vinyl groups, allyl groups, butenyl groups, pentenyl groups, hexenyl groups, heptenyl groups, octenyl groups, pentenyl groups, undecenyl groups, and dodecenyl groups, with vinyl groups and allyl groups preferable. Moreover, exemplary alkynyl groups of R² include ethynyl groups, propynyl groups, butynyl groups, pentynyl groups, hexynyl groups, heptynyl groups, octynyl groups, pentynyl groups, undecynyl groups, and dodecynyl groups, with ethynyl groups and propynyl groups preferable.

Moreover, in the formula, R³ is the same or different unsubstituted or halogen-substituted monovalent hydrocarbon group which has no aliphatic unsaturated carbon-carbon bond and has 1 to 12 carbon atoms, with specific examples thereof including: alkyl groups having 1 to 12 carbon atoms, such as methyl groups, ethyl groups, propyl groups, isopropyl groups, butyl groups, isobutyl groups, pentyl groups, isopentyl groups, neopentyl groups, heptyl groups, octyl groups, nonyl groups, decyl groups, undecyl groups, and dodecyl groups; aryl groups having 6 to 12 carbon atoms, such as phenyl groups, tolyl groups, and xylyl groups; aralkyl groups having 6 to 12 carbon atoms, such as benzyl groups and phenethyl groups; and halogenated alkyl groups having 1 to 12 carbon atoms, such as chloromethyl groups, 3-chloropropyl groups, and 3,3,3-trifluoropropyl groups, with methyl groups and phenyl groups preferable.

In the formula, "a" is 0, 1, or 2, and preferably 0.

Moreover, in the formula, "b" is an integer within a range of 0 to 50, preferably an integer within a range of 0 to 30, or an integer within a range of 0 to 20.

Exemplary organosiloxanes of such component (C) include organosiloxanes represented by the following formulas.

CH₂=CHSi[OSi(CH₃)₃]₃

CH₂=CHSi[OSi(CH₃)₂OSi(CH₃)₃]₃

CH₂=CH(CH₃)Si[OSi(CH₃)₃]₂

CH₂=CH(CH₃)Si[OSi(CH₃)₂OSi(CH₃)₃]₂

CH₂=CH(CH₃)₂SiOSi(CH₃)₃

CH₂=CHCH₂Si[OSi(CH₃)₃]₃

CH₂=CH(CH₂)₄(CH₃)₂Si[OSi(CH₃)₃]₂

CH₂=CH(CH₂)₆(CH₃)₂Si[OSi(CH₃)₃]₂

CH₂=CH(CH₃)₂Si[OSi(CH₃)₂]OSi(CH₃)₃

CH₂=CH(CH₃)₂Si[OSi(CH₃)₂]₁₂OSi(CH₃)₃

CH₂=CH(CH₃)Si[{OSi(CH₃)₂}₂OSi(CH₃)₃][{OSi(CH₃)₂}₃OSi(CH₃)₃]

In the present composition, as component (C), two or more alkenes or alkynes having 8 to 24 carbon atoms may be mixed and used, or two or more organosiloxanes having one alkenyl group or alkynyl group in each molecule may be similarly mixed and used. Further, as component (C), an alkene or alkyne having 8 to 24 carbon atoms may be mixed and used with an organosiloxane having one alkenyl group or alkynyl group in each molecule.

If only an alkene or alkyne having 15 or more carbon atoms is used as component (C), because the tack of the obtained pressure-sensitive adhesive layer tends to decrease, it is recommended to mix an alkene or alkyne having 14 or less carbon atoms and/or an organosiloxane having one alkenyl group or alkynyl group in each molecule. Because the constitution of the pre-composition can be stabilized, an alkene or alkyne having a low volatilitsenty and 15 or more carbon atoms, or an organosiloxane having one alkenyl group or alkynyl group in each molecule is preferably used as component (C), with at most 60 mass% of alkene or alkyne having 14 or less carbon atoms preferable.

A content of component (C) is more than 0 mass% and 30 mass% or less of the present composition, wherein the lower limit thereof is preferably 1 mass% or more, 3 mass% or more, 5 mass% or more, or 7 mass% or more, while the upper limit thereof is preferably 25 mass% or less. This is because, if the content of component (C) is within the abovementioned range, the viscosity of the present composition can be adjusted without reducing the adhesiveness of the pressure-sensitive adhesive layer.

Component (D) is a crosslinking agent of the present composition and is an organopolysiloxane having at least 8, preferably at least 9 or at least 10 hydrogen atom-bonded siloxane units in each molecule. This is because, if the number of hydrogen atom-bonded siloxane units is the abovementioned number or more, the volatility of component (D) decreases, allowing the constitution of the present composition to become stable; in contrast, while not limited thereto, the upper limit of the number of hydrogen atom-bonded siloxane units in each molecule is preferably 100 or less or 70 or less due to the relatively easy availability thereof. Note that exemplary hydrogen atom-bonded siloxane units in component (D) include a siloxane unit represented by the formula: HR³₂SiO_{1/2}, a siloxane unit represented by the formula: HR³SiO_{2/2}, and a siloxane unit represented by the formula: HSiO_{3/2}. Note that R³ in the formulas is an unsubstituted or halogen-substituted monovalent hydrocarbon group which has no aliphatic unsaturated carbon-carbon bond and has 1 to 12 carbon atoms, with examples thereof including the same groups as described above.

Moreover, while not limited thereto, a content of the silicon atom-bonded hydrogen in component (D) is preferably at least 0.5 mass%, at least 0.6 mass%, or at least 0.7 mass%. This is because, if the content of silicon atom-bonded hydrogen atoms in component (D) is at the abovementioned lower limit or more, the pressure-sensitive adhesive layer having a smaller reduction in the adhesiveness over time can be formed.

Moreover, exemplary groups bonded to silicon atoms other than hydrogen atoms in component (D) include unsubstituted or halogen-substituted monovalent hydrocarbon groups which have no aliphatic unsaturated carbon-carbon bond and 1 to 12 carbon atoms, with specific examples thereof including: alkyl groups having 1 to 12 carbon atoms, such as methyl groups, ethyl groups, propyl groups, isopropyl groups, butyl groups, isobutyl groups, pentyl groups, isopentyl groups, neopentyl groups, heptyl groups, octyl groups, nonyl groups, decyl groups, undecyl groups, and dodecyl groups; aryl groups having 6 to 12 carbon atoms, such as phenyl groups, tolyl groups, and xylyl groups; aralkyl groups having 6 to 12 carbon atoms, such as benzyl groups and phenethyl groups; and halogenated alkyl groups having 1 to 12 carbon atoms, such as chloromethyl groups, 3-chloropropyl groups, and 3,3,3-trifluoropropyl groups, with methyl groups and phenyl groups preferable.

While not limited thereto, examples of a molecular structure of component (D) include a linear structure, a partially branched linear structure, a branched structure, a cyclic structure, a network structure, and a resinous structure, with a linear structure or a partially branched linear structure preferable.

Examples of component (D) include a methylhydrogenpolysiloxane end-blocked at both molecular chain terminals with trimethylsiloxy groups, dimethylsiloxane-methylhydrogensiloxane copolymer end-blocked at both molecular chain terminals with trimethylsiloxy groups, dimethylsiloxane-methylhydrogensiloxane-methylphenylsiloxane copolymer end-blocked at both molecular chain terminals with trimethylsiloxy groups, dimethylsiloxane-methylhydrogensiloxane copolymer end-blocked at both molecular chain terminals with dimethylhydrogensiloxy groups, dimethylsiloxane-methylphenylsiloxane-methylhydrogensiloxane copolymer end-blocked at both molecular chain terminals with dimethylhydrogensiloxy groups, methylphenylsiloxane-methylhydrogensiloxane copolymer end-blocked at both molecular chain terminals with dimethylhydrogensiloxy groups, an organopolysiloxane resin consisting of a siloxane unit represented by the formula: R³₃SiO_{1/2}, a siloxane unit represented by the formula: R³₂HSiO_{1/2}, and a siloxane unit represented by the formula: SiO_{4/2}, an organopolysiloxane resin consisting of a siloxane unit represented by the formula: R³₂HSiO_{1/2} and a siloxane unit represented by the formula: SiO_{4/2}, an organopolysiloxane resin consisting of a siloxane unit represented by the formula: R³HSiO_{2/2}, a siloxane unit represented by the formula: R³SiO_{3/2}, or a siloxane unit represented by the formula: HSiO_{3/2}, and mixtures of two or more of these organohydrogenpolysiloxanes. Note that R³ in the formulas is an unsubstituted or halogen-substituted monovalent hydrocarbon group which has no aliphatic unsaturated carbon-carbon bond and 1 to 12 carbon atoms, with examples thereof including the same groups as described above.

Moreover, while not limited thereto, a viscosity of component (D) is such that the kinematic viscosity at 25°C is preferably within a range of 3 to 1,000 mm²/s, preferably within a range of 3 to 300 mm²/s, within a range of 3 to 100 mm²/s, or within a range of 3 to 50 mm²/s. This is because, if the viscosity of component (D) is at the lower limit of the abovementioned range or more, the volatility of component (D) decreases, allowing the constitution of the obtained cured product to become stable; in contrast, if the viscosity is at the upper limit of the abovementioned range or less, the cured product is difficult to obtain. Note that the kinematic viscosity of component (D) at 25°C can be measured with an Ubbelohde viscometer in accordance with JIS Z8803.

A content of component (D) is an amount such that silicon atom-bonded hydrogen atoms provided by the present component with respect to 1 mol of a total of the aliphatic unsaturated carbon-carbon bonds in components (A) to (C) are 0.1 mol or more and 1.5 mol or less, wherein the lower limit thereof is preferably 0.3 mol or more, 0.4 mol or more, 0.5 mol or more, or 0.6 mol or more, while the upper limit thereof is preferably 1.3 mol or less, 1.2 mol or less, or less than 1.2 mol. This is because, if the content of component (D) is at the lower limit of the abovementioned range or more, the pressure-sensitive adhesive layer having sufficient mechanical properties can be formed; in contrast, if the content is at the upper limit of the abovementioned range or less, the pressure-sensitive adhesive layer can be formed having less change in adhesiveness over time.

Component (E) is a hydrosilylation reaction catalyst for promoting a hydrosilylation reaction of the present composition. Examples thereof include platinum based catalysts, palladium based catalysts, and rhodium based catalysts, with platinum based catalysts preferable. Exemplary platinum based catalysts include chloroplatinic acid, alcohol solutions of chloroplatinic acid, carbonyl complexes of platinum, alkenyl siloxane complexes of platinum, and olefin complexes of platinum. In particular, alkenyl siloxane complexes of platinum are preferable in that their compatibility with component (A) is good. Exemplary alkenyl siloxanes in this alkenyl siloxane complex of platinum include 1,3-divinyltetramethyldisiloxane and 1,1,3,3-tetravinyldimethyldisiloxane.

A content of component (E) is of a sufficient amount so as to promote the hydrosilylation reaction of the present composition and is preferably an amount in which the catalyst metals in the present component are, in mass units, within a range of 0.1 to 1,000 ppm, 0.1 to 500 ppm, or 0.1 to 250 ppm, with respect to the present composition. This is because, if the content of component (E) is the lower limit of the abovementioned range or more, the hydrosilylation reaction of this composition is promoted; in contrast, if the amount is the upper limit of the abovementioned range or less, problems such as coloring of the obtained pressure sensitive adhesive layer are less likely to occur.

The present composition may comprise: (F) a hydrosilylation reaction inhibitor in order to adjust the speed of the hydrosilylation reaction. Examples of such component (F) include alkyne alcohols such as 2-methyl-3-butyn-2-ol, 3,5-dimethyl-1-hexyn-3-ol, 3-methyl-1-penten-3-ol, 2-phenyl-3-butyn-2-ol, 1-ethynyl-1-cyclohexanol, 2-ethynylisopropanol, and 2-ethynylbutan-2-ol; silylated acetylene alcohols such as trimethyl(3,5-dimethyl-1-hexyn-3-oxy)silane, dimethyl bis(3-methyl-1-butynoxy)silane, methylvinyl bis(3-methyl-1-butyn-3-oxy)silane, and [(1,1-dimethyl-2-propynyl)oxy]trimethylsilane; enyne compounds such as 2-isobutyl-1-buten-3-yne, 3,5-dimethyl-3-hexen-1-yne, 3-methyl-3-penten-1-yne, 3-methyl-3-hexen-1-yne, 1-ethynylcyclohexene, 3-ethyl-3-buten-1-yne, and 3-phenyl-3-buten-1-yne; unsaturated carboxylic acid esters such as diallyl maleate, dimethyl maleate, diethyl fumarate, diallyl fumarate, bis-2-methoxy-1-methylethyl maleate, monooctyl maleate, monoisooctyl maleate, monoallyl maleate, monomethyl maleate, monoethyl fumarate, monoallyl fumarate, and 2-methoxy-1-methylethyl maleate; alkenylsiloxanes such as 1,3,5,7-tetramethyl-1,3,5,7-tetravinylcyclotetrasiloxane and 1,3,5,7-tetramethyl-1,3,5,7-tetrahexenylcyclotetrasiloxane; and benzotriazoles.

While not particularly limited thereto, a content of component (F) is preferably 5 parts by mass or less or 3 parts by mass or less and 0.01 parts by mass or more or 0.1 parts by mass or more with respect to 100 parts by mass of a total of components (A) to (E). This is because, if the content of component (F) is at the lower limit of the abovementioned range or more, the usable time of a coating liquid can be ensured; in contrast, if the content is at the upper limit of the abovementioned range or less, this can be cured at ordinary curing temperatures.

Moreover, as long as the object of the present invention is not impaired, the present composition may comprise: reinforcing silica such as fumed silica, precipitated silica, burned silica, crystalline silica, quartz powder, and diatomaceous earth; and those obtained by treating the surface of this reinforcing silica with organic silicon compounds such as methylchlorosilanes, dimethylpolysiloxane, and hexamethyldisilazane. While not limited thereto, in terms of the handleability of the present composition, a content of such reinforcing silica is preferably 200 parts by mass or less, further preferably within the range of 3 to 150 parts by mass, with respect to 100 parts by mass of component (A).

The present composition may comprise: a heat-resistance improver, flame retardance improver, adhesion promoter, reaction inhibitor, etc. as required in addition to the abovementioned components. Moreover, other kinds of organopolysiloxanes may be further blended. As additives which may be additionally blended in this manner may, for example, heat-resistance improvers and flame retardance improvers selected from carbon, NiO₂, FeO, FeO₂, Fe₂O₃, Fe₃O₄, CoO₂, CeO₂, and TiO₂; flame retardance improvers such as benzotriazole and benzimidazole; adhesion promoters such as vinyltrimethoxysilane, 3-methacryloxypropyltrimethoxysilane, 3-acryloxypropyltrimethoxysilane, and 3-glycidoxypropyltrimethoxysilane; plasticizers and viscosity modifiers such as non-functional dimethylpolysiloxane, etc. can be used. Each amount of these additives used may be any amount as long as the object of the present invention is not impaired.

Moreover, as long as the object of the present invention is not impaired, the present composition may comprise: organic solvents such as toluene, xylene, hexane, ethyl acetate, and butyl acetate; and branched, linear, or cyclic organosiloxanes which do not fall under any of the abovementioned components (A) to (D) such as dimethylsiloxane end-blocked at both molecular chain terminals with trimethylsiloxy groups. While not limited thereto, each content of these organic solvents or organosiloxanes is preferably within a range of 0.5 to 10 mass%, within a range of 1 to 5 mass%, or within a range of 1 to 3 mass% of the present composition in order to reduce the viscosity, and in contrast, is preferably within a range of 0.1 to 10 mass% or within a range of 0.5 to 5 mass% of the present composition in order to improve leveling properties upon coating.

Next, the laminate of the present invention will be described in detail.

The laminate according to the present invention comprises: a support 1; and a pressure-sensitive adhesive layer 2 formed thereon by subjecting the abovementioned silicone pressure-sensitive adhesive composition to a hydrosilylation reaction. Such a laminate according to the present invention can be used as, for example, an adhesive film.

Examples of this support 1 include: inorganic based supports such as a glass plate, metal plate, and metal foil; and plastic plates or films such as polyester, polyimide, polyethylene terephthalate, polycarbonate, polyethylene, polypropylene, ethylene-propylene copolymer, ethylene-vinyl acetate copolymer, and ethylene-ethylene acrylate copolymer. While not limited thereto, a thickness thereof is generally preferably 10 to 3,000 µm.

In order to improve the adhesion with the pressure-sensitive adhesive layer 2, the surface of the support 1 thereof may be subjected to a primer treatment, corona treatment, etching treatment, or plasma treatment, with a silicone adhesive primer composition particularly preferably used as a primer. The primer composition disclosed in JPS 54-61242 A, JPH 03-28283 A, or JP 2013-139509 A can be used as such a silicone adhesive primer composition. Moreover, such a silicone adhesive primer composition can be prepared, for example, by blending a platinum based catalyst in DOW CORNING^{(R)} 7499 PSA PRIMER DOW CORNING^{(R)} 7387 CROSSLINKER produced by Dow Corning Corp.

In contrast, a release liner with a releasing layer treated can be used as the support to create a double-sided adhesive tape. Exemplary release liners include: films such as polyethylene, polypropylene, polystyrene, polyvinyl chloride, polycarbonate, polyethylene terephthalate (PET), nylon, and thermoplastic polyurethane, which are surface treated with fluorosilicone; fluorine based resin films such as polytetrafluoroethylene; and films such as polyethylene, polypropylene, polystyrene, polyvinyl chloride, polycarbonate, polyethylene terephthalate, nylon, and thermoplastic polyurethane, which are covered with a fluorine based resin such as polytetrafluoroethylene. Note, this release liner also functions as a peelable protective film preventing the adherence of dust on the surface of the double-sided adhesive tape during storage.

Note that examples of the method for coating a silicone pressure-sensitive adhesive layer on a support film 1 include gravure coating, offset coating, offset gravure, roll coating, reverse roll coating, air knife coating, curtain coating, and comma coating.

Subsequently, the silicone pressure-sensitive adhesive composition can be subjected to room temperature or heating for the hydrosilylation reaction so as to form the pressure-sensitive adhesive layer on the support. The heating conditions can be 15 seconds to 5 minutes at 60 to 160°C. In order to sufficiently subject the silicone pressure-sensitive adhesive composition to the hydrosilylation reaction and in order not to volatilize component (C) during the reaction, so-called step curing is preferably carried out in which the composition is heated at room temperature to 100°C, or 60 to 80°C, and then heated and cured at 80 to 160°C or 100 to 160°C. Moreover, the heating temperature may be continuously increased using a continuous furnace, etc.

In the laminate according to the present invention, while not limited thereto, a thickness of the pressure-sensitive adhesive layer 2 is generally within a range of 1 to 2000 µm or within a range of 5 to 500 µm.

Note that, as mentioned above, the laminate according to the present invention may be made by directly coating the present adhesive on the support, or it may be made by a transfer method in which the present pressure-sensitive adhesive is coated on a releasing film and releasing paper, after which the pressure-sensitive adhesive layer is formed by the hydrosilylation reaction, and then pasted together to the abovementioned support.

### [EXAMPLES]

The silicone pressure-sensitive adhesive composition and laminate of the present invention will hereinafter be described in further detail using examples and comparative examples. Note that in the examples, viscosities are values at 25°C. Moreover, the change in adhesion over time was measured as follows.

### <Viscosity>

The viscosity (mPa·s) is a value measured using a rotary viscometer in accordance with JIS K7117-1, while the kinematic viscosity (mm²/s) is a value measured with an Ubbelohde viscometer in accordance with JIS Z8803).

### <Mass average molecular weight>

The mass average molecular weight is a value in terms of standard polystyrene measured by gel permeation chromatography.

### <Adhesion and retention rate>

A pressure-sensitive adhesive film stored at 25°C for one day was cut to a width of one inch to create a pressure-sensitive adhesive tape, and then pressure bonded to a mirror finished stainless steel (SUS304) adherend using a 2 kgf rubber roller. Subsequently, the mixture was left to stand for 1 hour at 25°C. Using a low speed (300 mm/minute) tensile tester, the adhesion thereof was measured by the 180°peeling method to determine the adhesion (Kgf/inch).

Moreover, similarly as mentioned above, the adhesion of a pressure sensitive adhesive film stored at 70°C for seven days was measured by the 180°peeling method to determine the adhesion (Kgf/inch).

The proportion (%) of the adhesion during storage at 70°C for seven days to the adhesion during storage at 25°C for one day was determined as the retention rate (%).

The following components were used as components (A) to (F) in the examples and comparative examples.

The following components were used as component (A).
(a-1): a dimethylpolysiloxane end-blocked at both molecular chain terminals with dimethylvinylsiloxy groups and having a viscosity of 350 mPa·s (content of vinyl groups: 0.43 mass%)
(a-2): a dimethylpolysiloxane end-blocked at both molecular chain terminals with dimethylvinylsiloxy groups and having a viscosity of 2,000 mPa·s (content of vinyl groups: 0.22 mass%)
(a-3): a dimethylpolysiloxane end-blocked at both molecular chain terminals with hexenyldimethylsiloxy groups and having a kinematic viscosity of 7 mm²/s (content of hexenyl groups: 18.1 mass%)
(a-4): a dimethylpolysiloxane end-blocked at both molecular chain terminals with dimethylvinylsiloxy groups and having a kinematic viscosity of 60 mm²/s (content of vinyl groups: 1.57 mass%)
(a-5): a dimethylvinylsiloxy group-terminated poly(dimethylsiloxane-silicate) copolymer having a viscosity of 350 mPa·s (content of vinyl groups: 0.64 mass%)

The following components were used as component (B).
(b-1): an organosiloxane represented by the average unit formula:

   [(CH₃)₃SiO_{1/2}]_{0.44}(SiO_{4/2})_{0.56}

   (content of silicon atom-bonded hydroxy groups: 0.8 mass%; mass average molecular weight: 14,800)
(b-2): an organosiloxane represented by the average unit formula:

   [(CH₃)₃SiO_{1/2}]_{0.50}(SiO_{4/2})_{0.50}

   (content of silicon atom-bonded hydroxy groups: 0.4 mass%; mass average molecular weight: 5,400)
(b-3): an organosiloxane represented by the formula:

   [(CH₃)₃SiO_{1/2}]_{0.50}(SiO_{4/2})_{0.56}

   (content of silicon atom-bonded hydroxy groups: 0.9 mass%; mass average molecular weight: 10,200)

The following components were used as component (C).
(c-1): dodecene
(c-2): tetradecene
(c-3): hexadecene
(c-4): an organosiloxane represented by the formula:

   CH₂=CHSi[OSi(CH₃)₃]₃

The following components were used as component (D).
(d-1): an organopolysiloxane having a kinematic viscosity of 5 mm²/s and represented by the formula:

   (CH₃)₃SiO[(CH₃)HSiO]₁₄Si(CH₃)₃

   (content of silicon atom-bonded hydrogen atoms: 1.40 mass%)
(d-2): an organopolysiloxane having a kinematic viscosity of 20 mm²/s and represented by the formula:

   (CH₃)₃SiO[(CH₃)HSiO]₅₀Si(CH₃)₃

   (content of silicon atom-bonded hydrogen atoms: 1.60 mass%)
(d-3): an organopolysiloxane having a kinematic viscosity of 65 mm²/s and represented by the formula:

   (CH₃)₃SiO[(CH₃)HSiO]₂₈[(CH₃)₂SiO]₃₀Si(CH₃)₃

   (content of silicon atom-bonded hydrogen atoms: 0.70 mass%)
(d-4): an organopolysiloxane having a kinematic viscosity of 50 mm²/s and represented by the formula:

   (CH₃)₃SiO[(CH₃)HSiO]₁₆[(CH₃)₂SiO]₃₄Si(CH₃)₃

   (content of silicon atom-bonded hydrogen atoms: 0.44 mass%)
(d-5): an organopolysiloxane having a kinematic viscosity of 5 mm²/s and represented by the formula:

   (CH₃)₃SiO[(CH₃)HSiO]₆[(CH₃)₂SiO]₃₅Si(CH₃)₃

   (content of silicon atom-bonded hydrogen atoms: 0.78 mass%)
(d-6): an organopolysiloxane having a kinematic viscosity of 15 mm²/s and represented by the formula:

   X(CH₃)₂SiO[(CH₃)HSiO]₃[(CH₃)₂SiO]₁₈Si(CH₃)₂X

   (wherein, 90 mol% of X are hydrogen atoms, while the remaining 10 mol% are methyl groups.)
   (a content of silicon atom-bonded hydrogen atoms: 0.28 mass%)

The following component was used as component (E).
(e-1): a 1,3-divinyl-1,1,3,3-tetramethyldisiloxane solution of a 1,3-divinyl-1,1,3,3-tetramethyldisiloxane complex of platinum (content of platinum atoms: approximately 5200 ppm).

The following component was used as component (F).
(F-1): 2-methyl-3-butyn-2-ol

### [Example 1]

Component (a-1) as component (A), component (b-1) as component (B), a mixture consisting of 58 mass% of component (c-1), 19 mass% of component (c-3), and 23 mass% of component (c-4) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 75°C for 10 minutes, and then at 150°C for 2 minutes, to create an adhesive film having a pressure-sensitive adhesive layer with a thickness of 40 µm. The adhesion and retention rate of this adhesive film are indicated in Table 1.

### [Example 2]

Component (a-1) as component (A), component (b-1) as component (B), component (c-3) as component (C), component (d-2) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 80°C for 3 minutes, and then at 150°C for 3 minutes, to create an adhesive film having a pressure-sensitive adhesive layer with a thickness of 40 µm. The adhesion and retention rate of this adhesive film are indicated in Table 1.

### [Example 3]

Component (a-1) as component (A), component (b-1) as component (B), component (c-4) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 80°C for 3 minutes, and then at 150°C for 3 minutes, to create an adhesive film having a pressure-sensitive adhesive layer with a thickness of 40 µm. The adhesion and retention rate of this adhesive film are indicated in Table 1.

### [Example 4]

Component (a-1) as component (A), component (b-1) as component (B), component (c-3) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 90°C for 3 minutes, and then at 150°C for 3 minutes, to create an adhesive film having a pressure-sensitive adhesive layer with a thickness of 40 µm. The adhesion and retention rate of this adhesive film are indicated in Table 1.

### [Example 5]

Component (a-1) as component (A), component (b-1) as component (B), component (c-4) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 80°C for 3 minutes, and then at 150°C for 3 minutes, to create an adhesive film having a pressure-sensitive adhesive layer with a thickness of 40 µm. The adhesion and retention rate of this adhesive film are indicated in Table 1.

### [Example 6]

Component (a-1) as component (A), component (b-1) as component (B), a mixture consisting of 50 mass% of component (c-1) and 50 mass% of component (c-3) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 80°C for 3 minutes, and then at 150°C for 3 minutes, to create an adhesive film having a pressure-sensitive adhesive layer with a thickness of 40 µm. The adhesion and retention rate of this adhesive film are indicated in Table 1.

### [Example 7]

Component (a-1) as component (A), component (b-1) as component (B), a mixture consisting of 34 mass% of component (c-1), 34 mass% of component (c-3), and 32 mass% of component (c-4) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 80°C for 3 minutes, and then at 150°C for 3 minutes, to create an adhesive film having a pressure-sensitive adhesive layer with a thickness of 40 µm. The adhesion and retention rate of this adhesive film are indicated in Table 1.

### [Example 8]

As in Example 7, a silicone pressure-sensitive adhesive composition was prepared. Subsequently, this silicone pressure-sensitive adhesive composition was coated on a PET film to create a smooth coating surface, in addition to being cured at 150°C for 3 minutes to create an adhesive film having a pressure-sensitive adhesive layer with a thickness of 40 µm. The adhesion and retention rate of this adhesive film are indicated in Table 1.

### [Example 9]

A mixture consisting of 98 mass% of component (a-2) and 2 mass% of component (a-3) as component (A), component (b-1) as component (B), a mixture consisting of 20 mass% of component (c-1), 40 mass% of component (c-3), and 40 mass% of component (c-4) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 50°C for 10 minutes, then at 100°C for 7 minutes, and further at 150°C for 5 minutes, to create an adhesive film having a pressure-sensitive adhesive layer with a thickness of 40 µm. The adhesion and retention rate of this adhesive film are indicated in Table 1.

### [Example 10]

Component (a-1) as component (A), a mixture consisting of 48 mass% of component (b-1) and 52 mass% of component (b-2) as component (B), a mixture consisting of 33 mass% of component (c-1), 28 mass% of component (c-3), and 39 mass% of component (c-4) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 80°C for 3 minutes, and then at 150°C for 3 minutes, to create an adhesive film having a pressure-sensitive adhesive layer with a thickness of 40 µm. The adhesion and retention rate of this adhesive film are indicated in Table 1.

### [Example 11]

Component (a-1) as component (A), component (b-1) as component (B), component (c-3) as component (C), component (d-3) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 90°C for 2 minutes, and then at 150°C for 3 minutes, to create an adhesive film having a pressure-sensitive adhesive layer with a thickness of 40 µm. The adhesion and retention rate of this adhesive film are indicated in Table 1.

### [Example 12]

A mixture consisting of 84 mass% of component (a-1) and 16 mass% of component (a-5) as component (A), component (b-1) as component (B), component (c-3) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 100°C for 2 minutes, and then at 150°C for 3 minutes, to create an adhesive film having a pressure-sensitive adhesive layer with a thickness of 40 µm. The adhesion and retention rate of this adhesive film are indicated in Table 1.

### [Example 13]

A mixture consisting of 65 mass% of component (a-1) and 35 mass% of component (a-2) as component (A), component (b-1) as component (B), a mixture consisting of 29 mass% of component (c-1), 29 mass% of component (c-3), and 42 mass% of component (c-4) as component (C), component (d-4) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 80°C for 3 minutes, and then at 150°C for 3 minutes, to create an adhesive film having a pressure-sensitive adhesive layer with a thickness of 40 µm. The adhesion and retention rate of this adhesive film are indicated in Table 1.

### [Example 14]

A mixture consisting of 98 mass% of component (a-2) and 2 mass% of component (a-3) as component (A), component (b-1) as component (B), component (c-3) as component (C), component (d-1) as component (D), component (e-1) as component (E), component (f-1) as component (F), and hydrophobic fumed silica with a BET specific surface area of 200 m²/g and surface treated with hexamethyldisilazanene were respectively used to prepare a silicone pressure-sensitive adhesive composition. Note that the content of component (E) is such that the amount of platinum atoms in the silicone pressure-sensitive adhesive composition is 40 ppm, the content of component (F) is an amount of 0.2 parts by mass with respect to 100 parts by mass of a total of the abovementioned components (A) to (E) and silica, and the content of fumed silica is an amount of 34.4 parts by mass with respect to 100 parts by mass of the abovementioned component (A). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 100°C for 3 minutes, and then at 150°C for 3 minutes, to create an adhesive film having a pressure-sensitive adhesive layer with a thickness of 40 µm. The adhesion and retention rate of this adhesive film are indicated in Table 1.

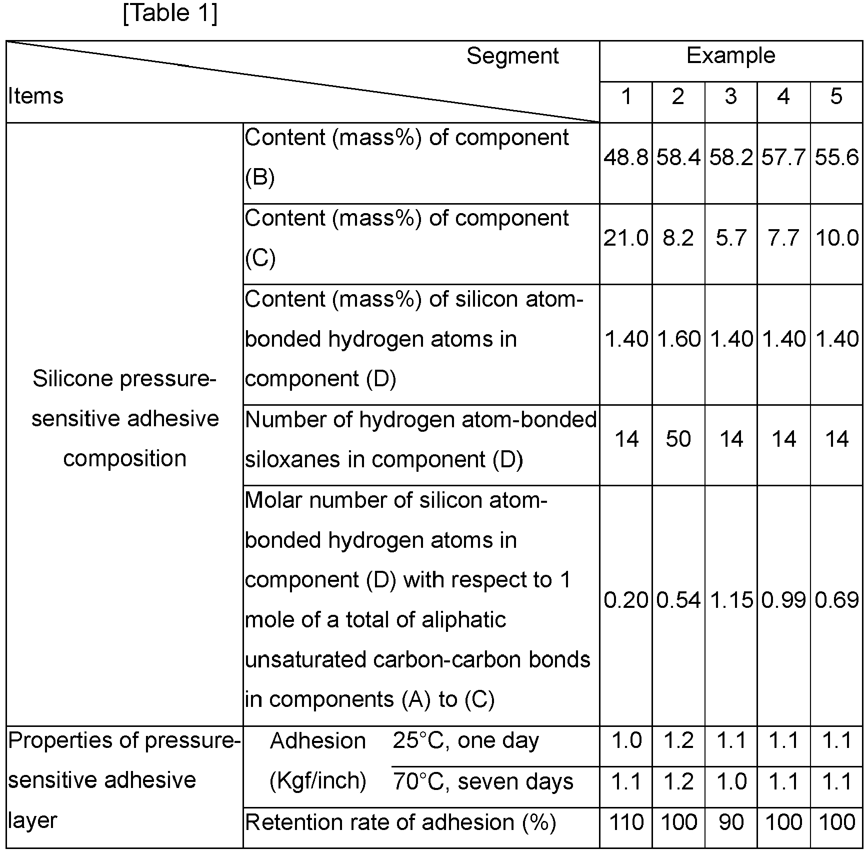

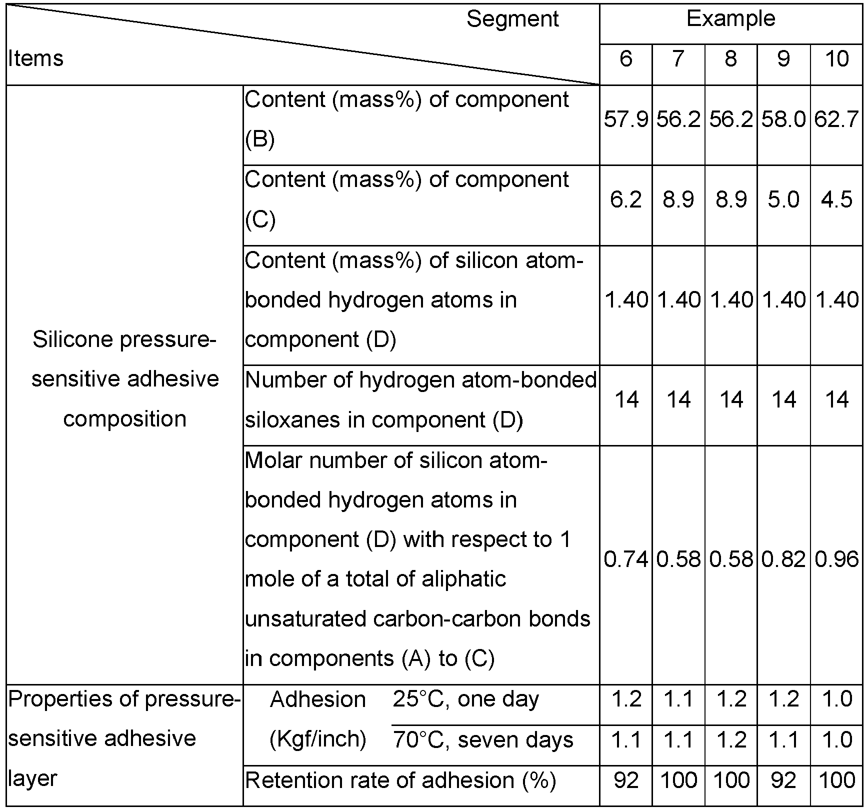

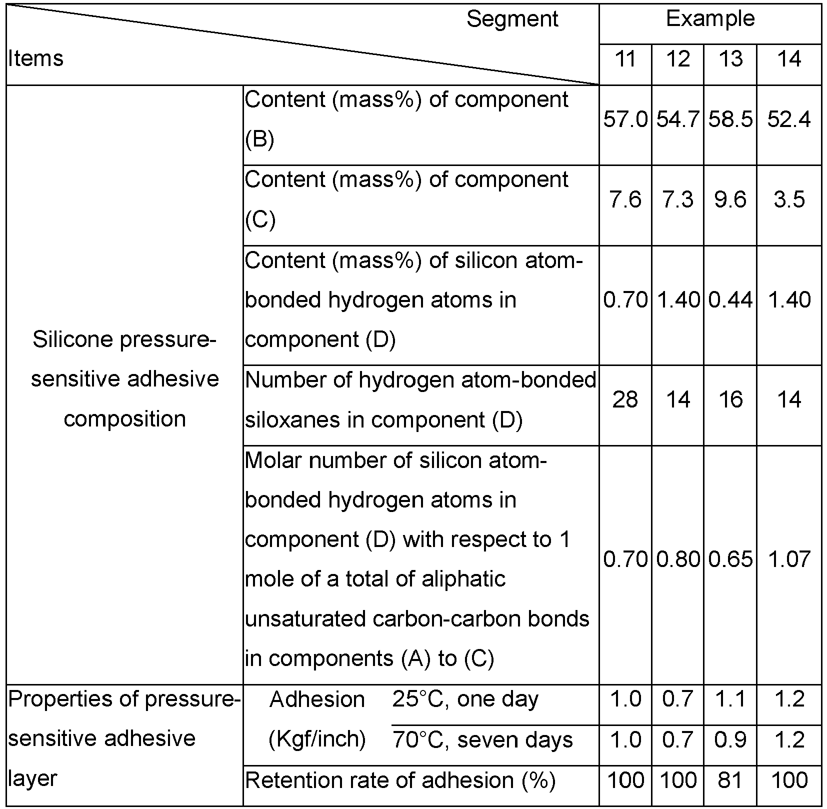

### [Comparative Example 1]

Component (a-1) as component (A), component (b-1) as component (B), component (c-3) as component (C), component (d-1) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 100°C for 2 minutes, and then at 150°C for 3 minutes, to create an adhesive film having a pressure-sensitive adhesive layer with a thickness of 40 µm. The adhesion and retention rate of this adhesive film are indicated in Table 2.

### [Comparative Example 2]

Component (a-1) as component (A), component (b-1) as component (B), component (c-3) as component (C), component (d-5) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 100°C for 2 minutes, and then at 150°C for 3 minutes, and at 140°C for 2 minutes, to create an adhesive film having a pressure-sensitive adhesive layer with a thickness of 40 µm. Although an attempt to measure the adhesion of this adhesive film was made, the pressure sensitive adhesive layer induced cohesive failure, rendering the measurement of adhesion impossible.

### [Comparative Example 3]

Component (a-1) as component (A), component (b-3) as component (B), component (c-2) as component (C), component (d-5) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 150°C for 3 minutes to create an adhesive film having a pressure-sensitive adhesive layer with a thickness of 40 µm. The adhesion and retention rate of this adhesive film are indicated in Table 2.

### [Comparative Example 4]

Component (a-4) as component (A), component (b-3) as component (B), a mixture consisting of 22 mass% of component (c-1) and 78 mass% of component (c-4) as component (C), component (d-6) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 90°C for 2 minutes, and then at 150°C for 3 minutes, to create an adhesive film having a pressure-sensitive adhesive layer with a thickness of 40 µm. The adhesion and retention rate of this adhesive film are indicated in Table 2.

### [Comparative Example 5]

Component (a-4) as component (A), component (b-1) as component (B), component (c-4) as component (C), component (d-6) as component (D), component (e-1) as component (E), and component (f-1) as component (F) were respectively used to prepare a silicone pressure-sensitive adhesive composition. Note that the content of component (E) is such that the amount of platinum atoms in the silicone pressure-sensitive adhesive composition is 40 ppm, while the content of component (F) is an amount of 0.2 parts by mass with respect to 100 parts by mass of a total of the abovementioned components (A) to (E). This silicone pressure-sensitive adhesive composition had a sufficiently low viscosity for coating using a table applicator.

Subsequently, this silicone pressure-sensitive adhesive composition was coated on a PET film to create a smooth coating surface, in addition to being cured at 140°C for 5 minutes to create an adhesive film having a pressure-sensitive adhesive layer with a thickness of 40 µm. The adhesion and retention rate of this adhesive film are indicated in Table 2.

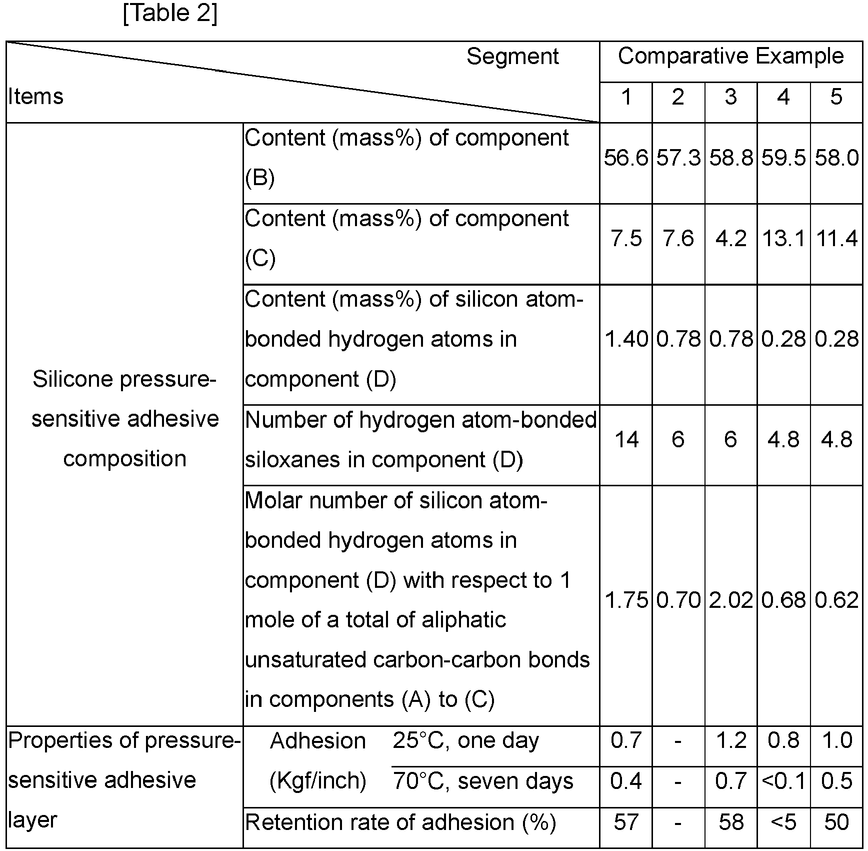

### [Industrial Applicability]

Because the silicone pressure-sensitive adhesive composition according to the present invention forms a pressure-sensitive adhesive layer which exhibits good adhesiveness along with little change in adhesiveness over time, it is suitable for applications for the purposes of protecting or masking components in the processing steps of precision components, optical members, or electronic components.

### [Reference Numerals]

- 1: Support
- 2: Pressure-sensitive adhesive layer

## Claims

1. A silicone pressure-sensitive adhesive composition comprising:
(A) a chain organopolysiloxane having at least two alkenyl groups in each molecule;
(B) an organopolysiloxane containing a siloxane unit represented by the formula: R¹₃SiO_{1/2} and a siloxane unit represented by the formula: SiO_{4/2}, wherein, R¹ is the same or different unsubstituted or halogen-substituted monovalent hydrocarbon group having 1 to 12 carbon atoms, and wherein a molar ratio of the siloxane unit represented by the formula: R¹₃SiO_{1/2} to the siloxane unit represented by the formula: SiO_{4/2} is 0.5 to 1.5, in an amount of 10 mass% or more and 80 mass% or less of the present composition;
(C) at least one reactive diluent having one aliphatic unsaturated carbon-carbon bond in each molecule, in an amount of more than 0 mass% and 30 mass% or less of the present composition;
(D) an organopolysiloxane having at least eight hydrogen atom-bonding siloxane units in each molecule, in an amount to provide 0.1 mol or more and 1.5 mol or less of silicon atom-bonded hydrogen atoms with respect to 1 mol of a total of aliphatic unsaturated carbon-carbon bonds in components (A) to (C); and
(E) a hydrosilylation reaction catalyst, in an amount sufficient to promote a hydrosilylation reaction of the present composition.

2. The silicone pressure-sensitive adhesive composition according to claim 1, wherein component (B) is an organopolysiloxane having 0.1 to 2.0 mass% of silicon atom-bonded hydroxyl groups.

3. The silicone pressure-sensitive adhesive composition according to claim 1, wherein component (C) is at least one selected from a group consisting of a branched or linear alkene having 6 to 24 carbon atoms, a branched or linear alkyne having 6 to 24 carbon atoms, and an organosiloxane having one aliphatic unsaturated carbon-carbon bond in each molecule.

4. The silicone pressure-sensitive adhesive composition according to claim 3, wherein the alkene for component (C) is dodecene, tetradecene, or hexadecene.

5. The silicone pressure-sensitive adhesive composition according to claim 3, wherein the organosiloxane for component (C) is an organosiloxane represented by the general formula:
R²R³ₐSi[(OSiR³₂)_{b}OSiR³₃]₍₃₋ₐ₎
wherein, R² is an alkenyl group or alkynyl group having 2 to 12 carbon atoms, R³ is the same or different unsubstituted or halogen-substituted monovalent hydrocarbon group having 1 to 12 carbon atoms and having no aliphatic unsaturated carbon-carbon bond, "a" is 0, 1, or 2, and "b" is an integer from 0 to 50.

6. The silicone pressure-sensitive adhesive composition according to claim 1, wherein a content of component (C) is 1 to 25 mass% of the present composition.

7. The silicone pressure-sensitive adhesive composition according to claim 1, wherein component (D) is an organopolysiloxane having at least 0.5 mass% of silicon-atom bonded hydrogen atoms.

8. The silicone pressure-sensitive adhesive composition according to claim 1, further comprising: (F) a hydrosilylation reaction inhibitor, in an amount of 5 parts by mass or less with respect to 100 parts by mass of a total of components (A) to (E).

9. A laminate comprising: a support, and a pressure sensitive adhesive layer formed thereon by subjecting the silicone pressure-sensitive adhesive composition according to any one of claims 1 to 8 to a hydrosilylation reaction.
